Europäisches Patentamt

European Patent Office

Office européen des brevets

(19)

(11) EP 1 285 953 A1

(12) **EUROPEAN PATENT APPLICATION**
published in accordance with Art. 158(3) EPC

(43) Date of publication:
26.02.2003 Bulletin 2003/09

(51) Int Cl.⁷: **C09D 201/00**, C09D 1/00,
C09D 5/16, C09D 7/12
// (B01J21/06, 35:02)

(21) Application number: 01982823.5

(22) Date of filing: 16.11.2001

(86) International application number:
**PCT/JP01/10037**

(87) International publication number:
**WO 02/040609 (23.05.2002 Gazette 2002/21)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: 17.11.2000 JP 2000351560

(71) Applicant: **Ecodevice Laboratory Co., Ltd
Iruma-shi, Saitama 358-0026 (JP)**

(72) Inventor: **SUGIHARA, Shinichi
Yokohama-shi, Kanagawa 227-0052 (JP)**

(74) Representative: **Patentanwälte
Ruff, Wilhelm, Beier, Dauster & Partner
Kronenstrasse 30
70174 Stuttgart (DE)**

(54) **COATING RESPONDING TO VISIBLE LIGHT, COATING FILM AND ARTICLE**

(57) A visible light responsive type paint comprising a binder, a visible light responsive type material and a solvent. A visible light responsive type coating film comprising a binder and a visible light responsive type material, and an article having this coating material. Said visible light responsive type material comprises at least anatase type titanium dioxide, as well as the main signal having a g value ranging from 2.004 to 2.007 and two subsignals having a g value ranging from 1.985 to 1.986 and a g value at 2.024 are observed in the ESR measured under the irradiation of light having a wavelength of 420 nm or more at 77 K in vacuum, and said three signals are observed in a little amount or substantially not observed in darkness at 77 K in vacuum.

Fig. 1

**Description**

Technical Field

The present invention relates to a visible light responsive type paint and coating film, as well as an article having this visible light responsive type coating film.

Background of the Invention

The use of photocatalysts comprising anatase titanium dioxide in anti-bacterial tile, self-cleaning building materials, ultrahydrophilic materials, nonodorous and deodorizing materials, water purification, cancer treatment, and the like is known (The Photoclean Revolution (Akira Fujishima et al.)), and various applications are being actively developed. Specifically, for example, WO 94/11092 discloses an air treatment method based on a photocatalyst used under indoor lighting. Japanese Unexamined Patent Publication (KOKAI) Heisei No. 7-102678 discloses a method of preventing in-hospital infection using a photocatalyst. Japanese Unexamined Patent Publication (KOKAI) Heisei Nos. 8-67835 and 8-164334 disclose antibacterial coating materials. And WO 96/29375 discloses an ultrahydrophilic material.

However, anatase titanium dioxide requires ultraviolet light of 400 nm or less as excitation radiation. By contrast, the solar radiation and artificial lighting that are available as sources of excitation radiation comprise much more visible radiation than ultraviolet radiation. However, photocatalysts comprising the above-mentioned titanium dioxide unfortunately are nearly incapable of exploiting visible radiation, and from the perspective of energy conversion efficiency, are extremely inefficient. This inefficiency constitutes a substantial barrier to their practical application.

Accordingly, photocatalysts capable of exploiting visible radiation are gradually being developed. For example, Japanese Unexamined Patent Publication (KOKAI) Heisei No. 10-146530 discloses a titanium oxide photocatalyst with an O/Ti atom number ratio in layers deeper than the surface that is lower than the O/Ti atom number ratio at the surface. This photocatalyst is formed by heating a complex of titanium alkoxide and a chelating agent (for example, acetyl acetone) at about 500°C under an oxidizing atmosphere. However, there are problems in that since titanium alkoxide and a chelating agent (for example, acetyl acetone) are employed in this method, the manufacturing cost is high, and since it is necessary to ensure different O/Ti atom number ratios on the surface and in the interior, it is extremely difficult to control manufacturing conditions. Further, it is stated in the embodiments that activity is achieved by irradiation with light of 420 nm or above, but the activity achieved is quite low and is not of a degree suited to actual practice. In addition, the present inventors conducted researches, as a result, it does not have NOx oxidation activity by a visible light anticipated as a function of photocatalyst, unfortunately.

A catalyst having activity under irradiation with visible light that is comprised of titanium dioxide having stable oxygen defects is also known (WO 00/10706). That photocatalyst is obtained, for example, by subjecting a starting material in the form of ST-01, a known ultraviolet radiation type photocatalyst manufactured by Ishihara Sangyo, to a plasma treatment with hydrogen, argon, or the like. ST-01, manufactured by Ishihara Sangyo, is a material having chiefly ultraviolet radiation activity, and as shown in Table 5 (Powder F), exhibits visible radiation activity up to nearly 420 nm, although of a degree much lower than that for ultraviolet radiation. However, it exhibits essentially no activity at 470 nm or more. By contrast, the photocatalyst described in above-cited WO 00/10706 is capable of photooxidation of NO with light having a wavelength of not just around 420 nm, but up to about 600 nm, and can be considered a true visible light photocatalyst.

However, since a plasma treatment was employed, a pressure reduction system was required. As a result, there are problems in that powder treatment, particularly uniform mixing, is difficult and the process is unsuited to continuous production.

Generally known wet methods of manufacturing anatase titanium oxide are (1) hydrolysis of a solution containing titanium such as titanyl sulfate, titanium sulfate, or the like; (2) hydrolysis of an organic titanium compound such as titanium alkoxide; and (3) sintering a precipitate obtained by neutralization, hydrolysis or the like of a titanium halide solution such as titanium tetrachloride.

As stated above, attempts have been made to develop visible radiation photocatalysts employing titanium alkoxide. However, at present, no visible radiation photocatalyst or visible light responsive material with inexpensive starting materials in the form of titanium sulfate or titanium chloride is known.

In the practical use of photocatalysts, it is necessary to form a surface covered with a photocatalyst on an article. When forming a photocatalyst on a surface, there is a method of forming only a photocatalyst on the surface being coated and a method of forming a coating film comprising a photocatalyst on the surface being coated. In the former, since the ratio of photocatalyst present on the coated surface is high, high photocatalytic activity can be expected. However, the use of a method such as sputtering is required, making it difficult to form the photocatalyst-coated surface. By contrast, since a paint comprising a photocatalyst is employed to form the coated surface in the latter, the formation of the coated surface is facilitated.

Paints comprising photocatalysts such as those mentioned above have been conventionally known, but paints comprising visible light type photocatalysts are virtually unknown. In particular, paints comprising visible light type photocatalysts manufactured by wet methods in which the manufacture is facilitated are entirely unknown.

Accordingly, the object of the present invention is to provide a paint and coating film comprising a new light responsive material (photocatalyst) also responding to visible radiation that can be manufactured inexpensively, and articles comprising this coating film.

Since conventional photocatalysts are of the ultraviolet radiation type, when the paint binder is an organic compound (organic polymer compound), there is a problem in that performance deteriorates due to the action of the photocatalyst, so an inorganic binder such as polysiloxane, for example, is employed. However, there are limited inorganic binders, and it is required to produce a photocatalytic paint employing an organic binder. The present invention provides a new paint comprising a light responsive material (photocatalyst), a coating film, and an article comprising the coating film, in which there is no deterioration of performance due to the action of the photocatalyst when employing either an inorganic or an organic binder.

In particular, the present invention provides a coating film having practical weather resistance and exhibiting hydrophilic properties when irradiated with light without the use of an inorganic binder such as polysiloxane, an article comprising this coating film, and a paint for forming this coating film.

Disclosure of the Invention

The present invention relates to a visible light responsive type paint comprising a binder, a visible light responsive type material and a solvent, characterized in that said visible light responsive type material comprises at least anatase type titanium dioxide, as well as the main signal having a g value ranging from 2.004 to 2.007 and two subsignals having a g value ranging from 1.985 to 1.986 and a g value at 2.024 are observed in the ESR measured under the irradiation of light having a wavelength of 420 nm or more at 77 K in vacuum, and said three signals are observed in a little amount or substantially not observed in darkness at 77 K in vacuum.

Further, the present invention relates to a paint comprising a binder, polyphosphate, a visible light responsive type material and a solvent, characterized in that said visible light responsive type material comprises at least anatase type titanium dioxide, as well as the main signal having a g value ranging from 2.004 to 2.007 and two subsignals having a g value ranging from 1.985 to 1.986 and a g value at 2.024 are observed in the ESR measured under the irradiation of light having a wavelength of 420 nm or more at 77 K in vacuum, and said three signals are observed in a little amount or substantially not observed in darkness at 77 K in vacuum.

Further, the present invention relates to a visible light responsive type coating film comprising a binder and a visible light responsive type material, characterized in that said visible light responsive type material comprises at least anatase type titanium dioxide, as well as the main signal having a g value ranging from 2.004 to 2.007 and two subsignals having a g value ranging from 1.985 to 1.986 and a g value at 2.024 are observed in the ESR measured under the irradiation of light having a wavelength of 420 nm or more at 77 K in vacuum, and said three signals are observed in a little amount or substantially not observed in darkness at 77 K in vacuum.

Further, the present invention relates to a coating film exhibiting hydrophilic property under the irradiation of light and comprising a binder, polyphosphate and a visible light responsive type material, characterized in that said visible light responsive type material comprises at least anatase type titanium dioxide, as well as the main signal having a g value ranging from 2.004 to 2.007 and two subsignals having a g value ranging from 1.985 to 1.986 and a g value at 2.024 are observed in the ESR measured under the irradiation of light having a wavelength of 420 nm or more at 77 K in vacuum, and said three signals are observed in a little amount or substantially not observed in darkness at 77 K in vacuum.

Further, the present invention relates to an article provided with the above-mentioned coating film of the present invention on at least a part of surface.

Brief Description of the Drawings

Fig. 1 shows ESR spectra of the visible light responsive type material employed in the present invention (Reference Example 1) measured at 77 K in vacuum. The upper segment is a spectrum measured in darkness, the middle segment is a spectrum measured with irradiation by light (light below 420 nm was cut off in light from a mercury lamp) having a wavelength of not less than 420 nm, and the lower segment is a spectrum measured with irradiation with light from a mercury lamp from which light of less than 420 nm was not cut off.

Fig. 2 shows ESR spectra of the visible light responsive type material employed in the present invention (Reference Example 1) measured at ordinary temperature in vacuum. The upper segment is a spectrum measured in darkness, the middle segment is a spectrum measured with irradiation by light (light below 420 nm was cut off in light from a mercury lamp) having a wavelength of not less than 420 nm, and the lower segment is a spectrum measured with irradiation with light from a mercury lamp from which light of less than 420 nm was not cut off.

Fig. 3 gives the results of measurement by XRD of the product of Reference Example 1 (upper segment) and a hydrolysis product (dried at 50°C) (lower segment).

Fig. 4 shows ESR spectra measured with irradiation through a filter (L-42) cutting off light (obtained using a 500 W high-pressure mercury lamp) below 420 nm employing a vacuum (upper segment), air (middle segment), and isopropanol (lower segment) as the measurement atmosphere.

Fig. 5 shows an ESR spectrum (measurement temperature 77 K) measured with irradiation through a filter (L-42) cutting off light (obtained using a 500 W high-pressure mercury lamp) below 420 nm for the product obtained in Reference Example 4.

Best Mode of Implementing the Invention

[Visible light responsive type material]

In the visible light responsive type material employed in the paint and coating film of the present invention comprising at least anatase titanium dioxide, observed are a main signal having a g value ranging from 2.004 to 2.007 and two subsignals having a g value ranging from 1.985 to 1.986 and a g value at 2.024 as measured by ESR under the irradiation of light having a wavelength of 420 nm or more at 77 K in vacuum. In the visible light responsive type material employed in the present invention, the three signals (one main signal and two subsignals) are further observed in a little amount or substantially not observed in darkness at 77 K in vacuum.

The visible light responsive type material employed in the present invention preferably comprises a main component in the form of anatase titanium dioxide, and may additionally comprise rutile titanium dioxide and/or amorphous titanium dioxide. Further, the anatase titanium dioxide need not necessarily have a high degree of crystallinity.

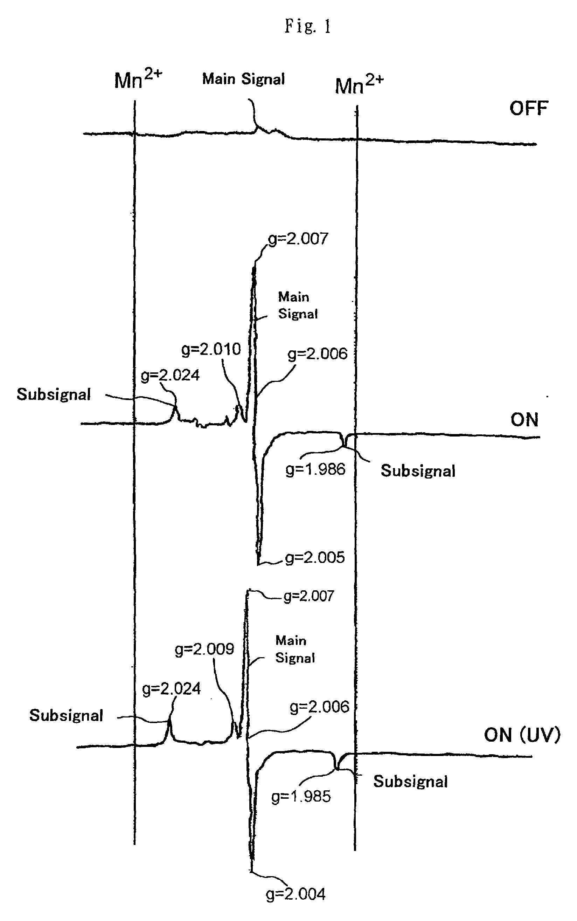

Fig. 1 shows conventional ESR spectra measured at 77 K in vacuum for the visible light responsive type material employed in the present invention. In the figure, the upper segment is a spectrum measured in darkness and the middle segment is a spectrum measured with irradiation with light having a wavelength of not less than 420 nm (obtained by cutting off light of less than 420 nm in light from a mercury lamp). The lower segment is a spectrum obtained by irradiation with light from a mercury lamp from which light of less than 420 nm has not been cut off. The upper segment, middle segment, and lower segment are all results obtained at identical GAIN.

As is clear from a comparison of the upper segment and middle segment spectra in Fig. 1, in the middle segment spectrum, the main signal having a g value ranging from 2.004 to 2.007 and the two subsignals having g values ranging from 1.985 to 1.986 and 2.024 are greater in intensity than those of the upper segment spectrum. Further, as is clear from a comparison of the middle segment and lower segment spectra of Fig. 1, the intensity of the main signal having a g value of 2.004 to 2.007 and those of the two subsignals having g values of 1.985 to 1.986 and 2.024 essentially did not differ regardless of whether or not light of less than 420 nm was included in the irradiating light.

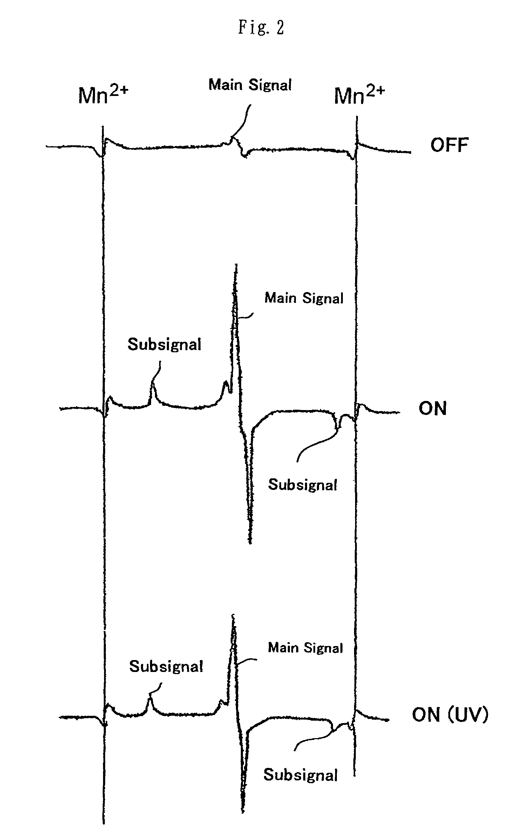

In the visible light responsive type material employed in the present invention, as shown in Fig. 2, the above-mentioned three signals can be observed by ESR in darkness or with irradiation by light having a wavelength of not less than 420 nm at ordinary temperature in vacuum. In Fig. 2, the upper segment is a spectrum measured in darkness and the middle segment is a spectrum measured with irradiation by light having a wavelength of not less than 420 nm (obtained by cutting off light of less than 420 nm in light from a mercury lamp). The lower segment is a spectrum obtained by irradiation with light from a mercury lamp from which light of less than 420 nm was not cut off. The upper, middle, and lower segments are all the results of measurements made at identical GAIN.

In the visible light responsive type material employed in the present invention, the above-described three signals are all attributed to radicals caused by hole complement. As shown in the reference examples, this is clear from ESR spectra in an isopropanol (an electron donor molecule) atmosphere and in oxygen (an electron acceptor molecule) atmosphere.

In addition to the above-described signals, the visible light responsive type material employed in the present invention may also have a subsignal having a g value ranging from 2.009 to 2.010 when measured with irradiation by light having a wavelength of not less than 420 nm at 77 K in vacuum. The subsignal having a g value ranging from 2.009 to 2.010 is shown in the ESR spectrum of the middle segment of Fig. 1.

The visible light responsive type material employed in the paint and coating film of the present invention can be oxygen defect type titanium oxide with titanium (Ti) to oxygen (O) bond ratio of less than 2. X-ray photo-electron spectroscopy (XPS) can be used to measure whether or not oxygen defect type titanium oxide is present.

It is desirable for the $530 \pm 0.5$ eV belonging to Ti-O of titanium oxide and the $532 \pm 0.5$ eV of the adsorption oxygen O-O bond, which have quite close bond energies, to be isolated and for calculations to be performed to confirm the bond state of titanium and oxygen and the stoichiometric ratio of elements that can be measured and specified by X-ray photo-electron spectroscopy. Looking at results measured and calculated by this method, it is possible to determine that the visible light responsive type material described in the embodiments of the present invention is of the oxygen defect type.

Even when error is taken into account, the O/Ti ratio of commercially available titanium oxide catalysts such as ST-01 (made by Ishihara Sangyo) and other catalysts such as JRC-IT03 (a reference catalyst of the Japan Catalyst Association) and P-25 (made by Nippon Aerogil) is $2.0 \pm 0.05$. Although the level of oxygen defects cannot be defined once and for all, 1.5-1.95 is desirable.

The visible light responsive type material employed in the present invention can be manufactured from starting materials in the form of amorphous or incomplete crystalline titanium dioxide. This starting material titanium dioxide can be obtained by the sulfuric acid method, the chloride method, or the wet method employing titanium alkoxide as starting material. More specifically, starting material titanium dioxide can be obtained by the hydrolysis of titanium chloride by ammonium hydroxide. In this hydrolysis, the amount of ammonium hydroxide added is suitably adjusted to yield a pH of not less than 6 in the reaction solution. The titanium chloride may be in the form of titanium trichloride, titanium tetrachloride, titanium oxychloride, or the like, or a mixture of these compounds may be employed. The above-mentioned hydrolysis may be conducted, for example, with cooling, or at a temperature falling in a range of ordinary temperature to 90°C. Hydrolysis at ordinary temperature is sometimes preferable because crystallinity is relatively low or amorphous titanium dioxide can be obtained. Further, the product of hydrolysis of titanium chloride by ammonium hydroxide is desirably first washed with an ammonium hydroxide aqueous solution before being employed as starting material titanium dioxide. Washing in ammonium hydroxide aqueous solution can be conducted to decrease the residual amount of ammonium chloride produced during hydrolysis to the suitable amount, and is preferably conducted multiple times.

Commercially available amorphous or incomplete crystalline titanium dioxide products may be employed. Examples are incomplete crystalline titanium dioxides such as ST-01 and C-02 made by Ishihara Sangyo.

Alternatively, the visible light responsive type material can be manufactured by the method comprising a titanium oxide comprising at least anatase type titanium oxide in which a hydrolysis product obtained by hydrolyzing titanium sulfate or titanyl sulfate is washed with water to remove at least a portion of sulfuric acid ions contained in said hydrolysis product, after which heating it in the presence of ammonia or a derivative thereof.

The washing of the hydrolysis product may be conducted with water or ammonia water. It will be subsequently understood from the results of examination further below that washing with water yields a product of higher BET specific surface area than washing with ammonia water. In the present invention, washing with water is employed. More specifically, when the heating conditions are identical, the product obtained by washing in water has almost twice the BET specific surface area of product obtained by washing with ammonia water.

Since products having higher BET specific surface areas can be expected to afford good adsorption performance, they are extremely advantageous when employing the material obtained by the manufacturing method of the present invention as a photocatalyst.

In the above manufacturing method, the above-mentioned washing in water is desirably conducted until the sulfuric acid ion concentration in the washing filtrate decreases to not more than 2,000 ppm. The above-mentioned washing in water is further preferably conducted until the sulfuric acid ion concentration in the washing filtrate decreases to not more than 1,500 ppm. When employing ammonia to hydrolyze titanium sulfate or titanyl sulfate, the above-mentioned washing in water is desirably conducted until the ammonium ion concentration in the washing filtrate decreases to not more than 200 ppm.

The visible light responsive type material employed in the present invention can be manufactured by the following method, for example, in addition to by the above-mentioned method. An amorphous or incomplete crystalline titanium dioxide is heated in the presence of ammonia or a derivative thereof. The ammonia may be liquid or gaseous. When using ammonia gas, the starting material titanium dioxide is heated in an ammonia gas atmosphere. Examples of ammonia derivatives are ammonium salts such as ammonium chloride; the starting material titanium dioxide is heated, for example, in the presence of ammonium chloride.

The heating of the starting material titanium dioxide in the presence of ammonia or a derivative thereof is stopped when the absorbance of light at a wavelength of 450 nm by the material produced by the heating becomes greater than the absorbance of light at a wavelength of 450 nm by the starting material titanium dioxide. Usually, the starting material titanium dioxide is white and its absorbance of light at a wavelength of 450 nm is about 10 percent. By contrast, when the starting material titanium dioxide is heated in the presence of ammonia or a derivative thereof, it gradually turns yellow. However, this coloration peaks at a certain point and then reduces, finally becoming a compound with absorbance about the same as the starting material titanium dioxide. Although the absorbance of light at a wavelength of 450 nm varies with the type of starting material titanium dioxide, type and quantity of ammonia (derivative) co-existed, heating temperature and time and the like, it sometimes reaches a maximum of about 60 percent. The characteristic of the visible light responsive type material is not definitively determined based on the intensity of absorbance of light at a wavelength of 450 nm, but when the absorbance of light at a wavelength of 450 nm is 20 percent or greater (reflectance is 80 percent or less), it has clearly become a material exhibiting visible light responsiveness.

The above-mentioned heating conditions cannot necessarily be specified by just temperature, but the temperature employed falls within a range of 300-500°C, for example. The heating can be conducted at ordinary pressure. Further, the heating time can be suitably determined based on the absorbance of light with a wavelength of 450 nm by the material produced by heating.

The above-mentioned heating can be performed with one of the rotary kilns, tunnel kilns, muffle furnaces, or the like commonly employed in this field. When the individual grains of titanium oxide aggregate or sinter by heating, they can be comminuted as needed with a pulverizer.

Further, the material obtained by heating as set forth above can be washed with water or an aqueous solution as necessary. This washing sometimes improves the visible light responsiveness of the visible light responsive type material obtained. For example, when the amorphous or incomplete crystalline titanium dioxide (the starting material prior to heating) is those obtained by hydrolyzing titanium chloride with ammonium hydroxide, a considerable amount of ammonium chloride remains in the hydrolysis product. As a result, heating of the amorphous or incomplete crystalline titanium dioxide to a prescribed temperature as set forth above can convert it to a visible light responsive type material. However, a large quantity of ammonium chloride sometimes remains in the material obtained even after the heat treatment. In such cases, it is sometimes possible to remove the ammonium chloride by washing with water or a suitable aqueous solution to improve the visible light responsiveness of the visible light responsive type material. In this case, washing the material obtained by heating with water or an aqueous solution may be conducted so that the pH of the water or aqueous solution following washing is 5 or greater.

Silicon, aluminum, tin, zirconium, antimony, phosphorus, platinum, gold, silver, copper, iron, niobium, tungsten, tantalum, other elements, and compounds containing the same can be coated onto, supported by, or doped into the visible light responsive type material employed in the present invention. For example, the above-mentioned visible light responsive type material can be supported by a carrier in the form of the transparent active alumina described in Japanese Unexamined Patent Publication (KOKAI) No. 2000-119017. This yields a transparent visible light responsive type material and can provide a transparent paint.

[Paint]

The paint of the present invention comprises at least the above-mentioned visible light responsive type material, a binder, and a solvent. The binder may be either organic or inorganic.

Examples of inorganic binders are: alkyl silicate; products obtained by hydrolyzing hydrolysis silicon compounds such as halogenated silicon and its partially hydrolyzed substance; silica; colloidal silica; water-glass, organopolysiloxanes and other silicon compounds; polycondensation products of organic polysiloxane compounds; zinc phosphate, aluminum phosphate, and other phosphates; diphosphates; cement; calcium oxide; calcium sulfate; frit for enamel; glost for glass lining; plaster; and other inorganic binders. Examples of organic binders are fluoropolymers, silicon polymers, acrylic resin, epoxy resin, polyester resin, melamine resin, urethane resin, alkyl resin, and other organic binders. Since the binder is deteriorated and decomposed by the photocatalytic function of the photocatalyst, it is necessary to suitably select the type of binder based on the location of use, degree of photocatalytic function, and application. However, since a visible light responsive type material is employed as photocatalyst in the present invention, the deterioration due to photocatalytic function is substantially reduced relative to paints employing conventional ultraviolet radiation type photocatalysts. When employed in a room with almost no ultraviolet radiation, there is almost no deterioration due to the photocatalytic function. Accordingly, in paints employing ultraviolet radiation type photocatalysts, unusable organic binders such as acrylic resin, epoxy resin, polyester resin, melamine resin, urethane resin, and alkyd resin may be employed without problem.

These binders may be employed singly or in combinations of two or more in the present invention.

Examples of alkyl silicates are the compounds denoted by the general formula $Si_nO_{n-1}(OR)_{2n+2}$ (where Si denotes silicon, O denotes oxygen, and R denotes an alkyl group). In the above, an example of n is 1-6 and an example of R is an alkyl group having 1-4 carbon atoms. However, the present invention is not limited thereto.

Examples of cements that are suitable for use are fast-setting cement, common cement, moderate-heat cement, sulfate-resistant cement, white cement, oil well cement, geothermal well cement, and other Portland cements; mixed cements such as fly ash cement, high-sulfate cement, silica cement, and furnace cement; and alumina cement.

Examples of plasters suitable for use are gypsum plaster, lime plaster, and dolomite plaster.

Examples of fluoropolymers are polyvinyl fluoride, polyvinylidene fluoride, polyethylene trifluorochloride, polyethylene tetrafluoride, polyethylene tetrafluoride-propylene hexafluoride copolymer, ethylene-polyethylene tetrafluoride copolymer, ethylene-ethylene trifluorochloride copolymer, ethylene tetrafluoride-perfluoroalkylvinyl ether copolymer, and other crystalline fluororesins; perfluorocyclopolymers, vinyl ether-fluoroolefin copolymers, vinyl ester-fluoroolefin copolymers, and other amorphous fluororesins; and various fluorine rubbers. Fluoropolymers comprising a chief component in the form of a vinyl ether-fluoroolefin copolymer or vinyl ester-fluoroolefin copolymer are employed with particular preference because they decompose or deteriorate little and are easy to handle.

Examples of silicon polymers suitable for use are straight-chain silicon resins, acrylic-modified silicon resins, and various silicon rubbers.

The organic polysiloxane compound employed in polycondensation products of an organic polysiloxane compound is a substance known to be a hydrolysis product of organic silicon compounds; those described in Japanese Unexamined Patent Publication (KOKAI) Heisei Nos. 8-164334, 8-67835, 8-155308, 10-66830, and Japanese Patent No. 2,756,474 may be employed without modification.

Organic polysiloxane compounds are the hydrolysis products of organic silicon compounds. Examples of organic silicon compounds are those having alkyl groups and alkoxy groups.

Products obtained by hydrolysis of organic silicon compounds having alkyl groups and alkoxy groups are also known, which can be obtained , for example, by hydrolyzing the organic silicon compound denoted by $R^1_nSi(OR^2)_{4\cdot n}$. $R^1$ and $R^2$ each denote, for example, a lower alkyl group having 1-8 carbon atoms. In consideration of the film strength of the coating obtained, $R^1$ is a lower alkyl having 1-3 carbon atoms, preferably a methyl group. In the above formula, n denotes an integer of 0-2; more particularly, the use of a hydrolysis product (three-dimensional crosslinked product) in the form of a mixture of organic silicon compounds in which n is 1 and 2 is desirable to achieve film strength and the like.

Examples of such organic silicon compounds are: methyltrimethoxysilane, methyltriethoxysilane, methyltriisopropoxysilane, methyltri-t-butoxysilane, methyltrichlorosilane, methyltribromosilane; ethyltrimethoxysilane, ethyltriethoxysilane, ethyltriisopropoxysilane, ethyltri-t-butoxysilane, ethyltrichlorosilane, ethyltribromosilane; n-propyltrimethoxysilane, n-propyltriethoxysilane, n-propyltriisopropoxysilane, n-propyltri-t-butoxysilane, n-propyltrichlorosilane, n-propyltribromosilane; n-hexyltrimethoxysilane, n-hexyltriethoxysilane, n-hexyltriisopropoxysilane, n-hexyltri-t-butoxysilane, n-hexyltrichlorosilane, n-hexyltribromosilane; n-decyltrimethoxysilane, n-decyltriethoxysilane, n-decyltriisopropoxysilane, n-decyltri-t-butoxysilane, n-decyltrichlorosilane, n-decyltribromosilane; n-octadecyltrimethoxysilane, n-octadecyltriethoxysilane, n-octadecyltriisopropoxysilane, n-octadecyltri-t-butoxysilane, n-octadecyltrichlorosilane, n-octadecyltribromosilane, tetramethoxysilane, tetraethoxysilane, tetrabutoxysilane, dimethoxydiethoxysilane; dimethyldimethoxysilane, dimethyldiethoxysilane, Y-glycidoxypropylmethyldimethoxysilane, Y-glycidoxypropylmethyldiethoxysilane, Y-glycidoxypropyltrimethoxysilane, Y-glycidoxypropyltriethoxysilane, Y-glycidoxypropyltriisopropoxysilane, and Y-glycidoxypropyltri-t-butoxysilane.

The blending proportion of binder based on solid component is about 10-2,000 weight percent, preferably 25-1,000 weight percent, more preferably 25-500 weight percent, and still more preferably 25-250 weight percent of the visible light responsive type material particles. Restricting the blending proportion of the binder to within the above-stated range makes it possible to maintain the function of the visible light responsive type material without desorption of the visible light responsive type material when forming a coating film of visible light responsive type material.

Organic and inorganic solvents and mixtures thereof may be employed as solvent. Water is the inorganic solvent of preference. Examples of organic solvents suitable for use are methanol, ethanol, 2-propanol, ethylene glycol, other alcohols, and ketones. Alcohols are preferably incorporated from the viewpoints of ease of handling and coating properties. The blending proportion of the solvent can be suitably set based on operation properties.

As needed, at least one compound selected from the group consisting of dicarboxylic acids and derivatives thereof can be incorporated into the visible light responsive type material composition of the present invention. Dicarboxylic acids are organic compounds comprising two carboxyl groups, COOH, within the molecule. Examples suitable for use are oxalic acid, malonic acid, succinic acid, glutaric acid, adipic acid, pimelic acid, suberic acid, azelaic acid, sebacic acid, and other aliphatic saturated dicarboxylic acids; maleic acid, fumaric acid, and other aliphatic unsaturated dicarboxylic acids; and phthalic acid, isophthalic acid, terephthalic acid, and other aromatic dicarboxylic acids. Dicarboxylic acid derivatives suitable for use are compounds obtained by changing a small portion of the dicarboxylic acid structure, such as esters of the above-listed dicarboxylic acids, salts of dicarboxylic acids, anhydrides of dicarboxylic acids, azides of dicarboxylic acids, amides of dicarboxylic acids, and imides of dicarboxylic acids. Examples are methyl dicarboxylate, ethyl dicarboxylate, propyl dicarboxylate, butyl dicarboxylate, sodium dicarboxylate, and ammonium dicarboxylate. Commercial products containing dicarboxylic acid or a derivative thereof, for example, the product known as Rodiasolve (made by Rhone-Poulenc Japan Co.), which is a blend of three dicarboxylic esters, may be employed.

The content of dicarboxylic acid and derivatives thereof is about 0.5-500 weight percent, preferably 5-500 weight percent, more preferably 10-500 weight percent, and still more preferably 25-250 weight percent, of the visible light responsive type material particles in the visible light responsive type paint composition. When the content of dicarboxylic acid and derivatives thereof falls below the above-stated range, an addition effect is difficult to achieve, and when the content exceeds the above-stated range, a marked effect is difficult to achieve no matter how great the subsequent increase. A visible light responsive type material film prepared with a visible light responsive type paint composition comprising dicarboxylic acid or a derivative thereof is porous and affords improvement in the function of the visible light responsive type material. Further, in addition to at least one compound selected from the group comprising dicarboxylic acids and derivatives thereof; visible light responsive type material particles; binder; and solvent, the visible light responsive type paint composition of the present invention may also comprise additives in the form of various dispersants, surfactants, curing agents, and crosslinking agents.

The present invention relates to articles on which a visible light responsive type material coating films are formed using the visible light responsive type paint composition set forth above. Articles suitable for use are ceramics, glass, and other inorganic substance articles; plastic, rubber, wood, paper, and other organic substance articles; metals such as aluminum; and metallic material articles of alloys such as screens . The size and shape of the article are not specifically limited. The film thickness of the visible light responsive material coating film formed on the article may be suitably set based on the application. Examples of possible film thicknesses are about 0.01-100 μm. The visible light responsive type material film can be formed on the article by coating or spraying on the article the visible light responsive type paint composition of the present invention. Specifically, it is preferable that a paint composition is prepared by dispersing the visible light responsive type material particles and binder in a solvent, after which the paint composition is coated or sprayed onto a base member, with the visible light responsive type material particles and the binder being present on at least a portion of the base member. Examples of the above-mentioned solvent are water, toluene, alcohol, and other organic solvents. Examples of coating methods are immersion, dip coating, spiner coating, blade coating, roller coating, wire bar coating, reverse roll coating, brush coating, brush coating, sponge coating and other commonly employed coating methods; or spraying can be done by the usual method such as spray coating. After coating or spraying in this manner, the solvent is removed by drying or sintering. The drying or sintering temperature is desirably lower than 500°C, with a temperature of room temperature to 400°C being preferred. A temperature exceeding 500°C is undesirable because the function of the visible light responsive type material decreases. As needed, a method such as irradiation with ultraviolet radiation may be employed to solidify the binder employed. As needed, prior to coating or spraying the visible light responsive type paint composition onto the article, the above-mentioned organic binder such as acrylic resin, epoxy resin, polyester resin, melamine resin, urethane resin, alkyd resin or the like or the above-described inorganic binder may be precoated or presprayed onto the article as a primer or coating.

The paint and coating film of the present invention may also comprise a granular substance, adsorbent, carrier, and/or condensed phosphate. Examples of granular substances are inorganic and organic particles having a mean particle diameter of 1 nm to 100 μm. In the present invention, adhering the visible light responsive type material particles and adsorbent and/or carrier to the base member through a binder is desirable in that the substance being processed is imparted with both adsorption and/or carrier actions. Common adsorbents and carriers may be employed as the adsorbent and carrier mentioned above. Examples are activated charcoal, zeolite, silica gel, transparent active alumina (for example, that described in Japanese Unexamined Patent Publication (KOKAI) No. 2000-119017), amorphous or low-crystallinity titanium dioxide, and diatomaceous earth. Amorphous and low-crystallinity titanium dioxide may be obtained by hydrolyzing titanium sulfate or titanyl sulfate with ammonium hydroxide, sintering the product at 400°C, for example, with the residual sulfuric acid ions present, and washing the product as needed. Using, as a visible light responsive type material, those obtained by adsorbing or supporting the visible light responsive type material on a suitable material (for example, transparent active alumina) in the above-mentioned adsorbent or carrier yields transparency in the case of a coating film and sometimes improves mechanical strength and weather resistance.

The present invention covers paints comprising a binder, condensed phosphate, visible light responsive type material, and solvent. In the paints, the preferred solvent is water. A paint comprising water as a solvent and a condensed phosphate has good dispersion property of the visible light responsive type material particles, and coating films obtained from this paint exhibit good visible light response.

In particular, the present invention covers coating films comprising a binder, condensed phosphate, and visible light responsive type material. The coating film exhibits hydrophilic properties when irradiated with light.

Conventional hydrophilic paints and coating films (for example, those described in Japanese Unexamined Patent Publication (KOKAI) Heisei No. 11-1659) incorporate silica or silicone to achieve weather resistance. By contrast, the present invention yields a coating film with good weather resistance without incorporating silica or silicone. Since a coating film of good weather resistance can be achieved without incorporating silica or silicone, the degree of compositional freedom increases. For example, it is possible to increase the quantity of binder or the content of visible light responsive type material.

However, the paint and coating film of the present invention may contain silica or silicone.

The quantity of condensed phosphate in the above-described paint and coating film is 0.5-5 percent, preferably 1-1.2 percent based on the weight of the visible light responsive type material, yielding a paint of good dispersion property, viscosity, and stability. Generally, as the specific surface area of the visible light responsive type material is larger, or the quantity of surface coating agent is larger, the optimum blending quantity of condensed phosphate becomes larger. The optimum blending quantity of condensed phosphate differs based on the method of manufacturing the visible light responsive type material and the type of surface coating agent. The condensed phosphate is not limited to one type; two or more types may be combined for use.

In addition to the above-described components, colloidal oxides may also be incorporated into the paint and coating film of the present invention. An example of a colloidal oxide is colloidal silica. Since colloidal oxides increase the surface area of the coating (rendering it porous) due to their fine particles, it is possible to increase the contact frequency between visible light response type materials and substances being reacted with. However, colloidal oxides are not an essential component of the coating film of the present invention for achieving weather resistance.

In the present invention, a first layer comprised of binder not containing the visible light responsive type material particles is provided on a base member, and over the first layer, provided is a second layer comprised of binder and the visible light responsive type material particles. Providing a first layer not comprising visible light responsive type material particles makes it possible to adhere more firmly and for an extended period of time the visible light responsive type material particles to the base member. An organic binder is preferred as such a binder. The incorporation into the first layer of a filler in the form of inorganic particles not having a visible light responsive type material function is desirable. Titanium oxide, silicon oxide, aluminum oxide, and magnesium oxide surface treated with silicon oxide, aluminum oxide, zirconium oxide or the like so as not to have a visible light responsive type material function, can be employed as such inorganic particles.

In the present invention, the quantity of visible light responsive type material particles in the paint composition is 5-98 percent, preferably 20-98 percent, more preferably 50-98 percent, and still more preferably, 70-98 percent based on volume relative to the total amount of the visible light responsive type material particles and binder. Crosslinking agents, dispersants, fillers, and the like may be blended into the paint composition. The usual crosslinking agents, such as isocyanates and melamines, may be employed as the crosslinking agents. Coupling agents may be employed as the dispersants. In particular, when the content of the visible light responsive type material particles in the paint composition based on volume relative to the total quantity of the visible light responsive type material particles and binder is 40-98 percent, a coupling agent is desirably blended into the paint composition. The quantity of this coupling agent that is added is desirably 5-50 percent, more preferably 7-30 percent.

The visible light responsive type material product of the present invention is obtained by coating or spraying as mentioned above, followed by solidification. Solidification can be conducted by drying, irradiation with ultraviolet radiation, heating, cooling, or employing crosslinking agents. Solidification is conducted at a temperature lower than 400°C, preferably a temperature of room temperature to 200°C. In this case, a temperature higher than 400°C is not desirable because the binder deteriorates due to heat and the visible light responsive type material particles tend to desorb. In the present invention, the preferred method of solidification is the use of a crosslinking agent such as an isocyanate or a melamine.

The present invention relates to articles having the above-mentioned coating film of the present invention on at least a portion of a base material surface. Base materials suitable for use include the outer wall surfaces of buildings, external roof surfaces, external window glass surfaces, internal window glass surfaces, room wall surfaces, floor surfaces, ceiling surfaces, blinds, curtains, protective walls along roads, interior tunnel walls, the exterior surfaces and reflective surfaces of lights, the interior surfaces of vehicles, and mirror surfaces.

The use of a coating film comprising the visible light responsive type material of the present invention or an article having this coating film affords a method of sterilizing and/or preventing stain. The use of the visible light responsive type material of the present invention provides a method of clarifying water and a method of clarifying nitrogen oxides.

Irradiating the coating film comprising the visible light responsive type material of the present invention with visible light decomposes and clarifies nearby harmful substances, foul substances, oily components and the like, permitting sterilization. Light comprising visible light is an example of the light used for irradiation. Specific examples suitable for use are sunlight, fluorescent light, and the light of a halogen lamp, xenon flash lamp, or mercury lamp. The light preferably comprises visible light of 400-700 nm. The level and duration of irradiation with light may be suitably set based on the quantity of the substance being processed.

Embodiments

Embodiments of the present invention are given below. However, the present invention is not limited thereto.

Reference Example 1

To pure ice water (two liters of water) were added 500 g of titanium tetrachloride (special grade, manufactured by Kanto Kagaku K.K.) and the mixture was stirred and dissolved, yielding a titanium tetrachloride aqueous solution. While stirring 200 g of this aqueous solution in a stirrer, about 50 mL of ammonia water (comprising 13 weight percent as $NH_3$) was added as rapidly as possible. The quantity of ammonia water added was adjusted to yield a final pH of about 8 in the aqueous solution. This converted the aqueous solution to a white slurry. After stirring for another 15 min, the mixture was filtered with a suction filter. The filtered precipitate was dispersed in 20 mL of ammonia water (containing 6 weight percent as $NH_3$) and stirred using a stirrer for about 20 hours. The mixture was then suction filtered again, yielding a white hydrolysis product.

The white hydrolysis product obtained was transferred to a crucible and heated to 400°C for 1 hour in air with an electric furnace, yielding a yellow product.

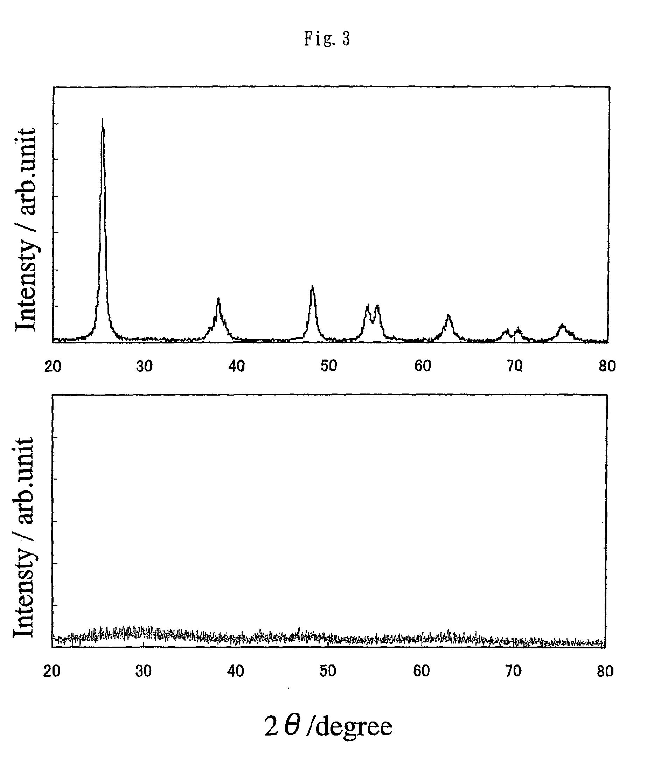

The results of XRD measurement of the obtained product are given in the upper segment of Fig. 3. In addition, the results of XRD measurement of the white hydrolysis product dried at 50°C are given in the lower segment of Fig. 3. From these results, it will be understood that the product obtained by drying the white hydrolysis product at 50°C was amorphous and the obtained product contained anatase titanium dioxide.

The absorption spectra of the obtained product and the white hydrolysis product dried at 50°C obtained were measured under the following conditions with a Hitachi Autorecording Spectrophotometer (U-3210) equipped with integrating sphere:

| Scan speed | 120 nm/min, |
|---|---|
| Response | MEDIUM, |
| Band pass | 2.00 nm, and |
| Reference | barium sulfate. |

As a result, when the reflectance at 700 nm of the obtained product was defined as 100 percent, the reflectance thereof at 450 nm was 61 percent. By the contrast, when the reflectance at 700 nm of the product obtained by drying the white hydrolysis product at 50°C was defined as 100 percent, the reflectance thereof at 450 percent was 95 percent.

Further, the ESR spectrum of the obtained product was measured. Measurement was conducted at 77 K or ordinary temperature in vacuum (0.1 Torr or less). The measurement conditions were as follows:

[Basic Parameters]

Measurement temperature: 77 K or ordinary temperature
Field: 324 mT ± 25 mT
Scan time: 4 min
Mod.: 0.1 mT
Receiver GAIN: 10-100 (measurement sensitivity)
Time constant: 0.1 sec
Light source: 500 W high-pressure mercury lamp
Filter:L-42

[Sample Preparation]

Vacuum evacuation: 1 hr or more

[g Value Calculation]

$$g=g_{mn} \times H_{mn}/(H_{mn} + \Delta H) \text{ based on } Mn^{2+} \text{ marker } (g_{mn}=1.981)$$

$H_{mn}$: $Mn^{2+}$ marker magnetic field
$\Delta H$: Amount of change in magnetic field from $H_{mn}$

Fig. 1 (measurement temperature 77 K) and Fig. 2 (measurement temperature ordinary temperature) show the ESR spectra in the dark in the upper segment, the ESR spectrum measured with irradiation with light through a filter (L-42) cutting light (obtained using a 500 W high-pressure mercury lamp) below 420 nm in the middle segment, and the ESR spectrum measured with irradiation of light employing a 500 W high-pressure mercury lamp without using a filter (L-42) cutting light below 420 nm is shown in the lower segment.

A comparison of the spectra of the upper and middle segments of Fig. 1 clearly reveals that in the middle segment spectrum, the main signal having a g value ranging from 2.004 to 2.007 and the two subsignals having g values ranging from 1.985 to 1.986 and 2.024 exhibited intensities stronger than in the spectrum in the upper segment. Further, a comparison of the spectra of the middle and lower segment spectra of Fig. 1 clearly reveals that neither the main signal having a g value ranging from 2.004 to 2.007 nor the two subsignals having g values ranging from 1.985 to 1.986 and 2.024 differed substantially even when light of less than 420 nm was included in the irradiating light.

Further, as shown in Fig. 2, the above-described three signals were observed in the ESR of the visible light responsive type material of Reference Example 1 in darkness and with irradiation with light having a wavelength of 420 nm or more at ordinary temperature in air.

The main signal having a g value ranging from 2.004 to 2.007 and the two subsignals having g values ranging from 1.985 to 1.986 and 2.024 were not observed under any of the ESR measurement conditions in the white hydrolysis product dried at 50°C.

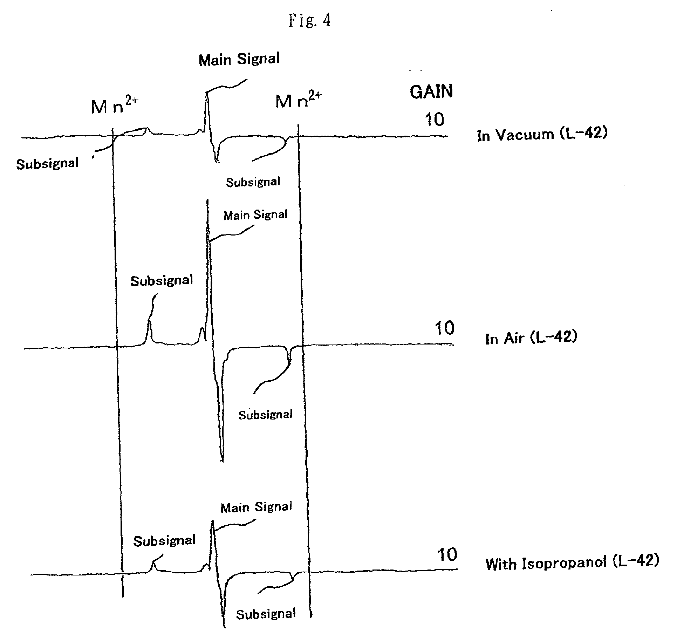

ESR spectra were measured by replacing the vacuum measurement atmosphere with an air or isopropanol and employing the same conditions of light irradiation through a filter (L-42) cutting out light (obtained using a 500 W high-pressure mercury lamp) of 420 nm or less. The results are given in Fig. 4. In the figure, the upper segment gives the results of measurement in vacuum, the middle segment gives those for air, and the lower segment gives those for isopropanol. The main signal and the two subsignals were smallest in vacuum, increased somewhat in isopropanol relative to in vacuum, and were largest in air, as shown in the middle segment. While isopropanol is an electron donor molecule, the oxygen in the air is an electron acceptor molecule. Thus, these results suggest that the three above-described signals can be attributed to radicals caused by hole complement.

Reference Example 2

The white hydrolysis product obtained in Reference Example 1 was heated under the same conditions as in Reference Example 1 with the exception that the heating time was set to 20 min or 3 hr, and yellow products were obtained. The absorption spectra of these products were measured in the same manner as in Reference Example 1. When the reflectance at 700 nm of the sample heated for 20 min was defined as 100 percent, the reflectance thereof at 450 nm was 67 percent. And when the reflectance at 700 nm of the sample heated for 3 hr was defined as 100 percent, the reflectance thereof at 450 nm was 67 percent.

Reference Example 3

With the exception that the titanium tetrachloride was replaced with titanium trichloride, a white hydrolysis product was obtained in the same manner as in Reference Example 1. The white hydrolysis product was heated for 1 hr at 400°C, yielding a yellow product. The ESR spectrum (measurement temperature 77 K) of this product that was measured with irradiation by light passing through a filter (L-42) cutting light (employing a 500 W high-pressure mercury lamp) below 420 nm exhibited a main signal and two subsignals having the same g values as in the middle segment of Fig. 1.

Reference Example 4

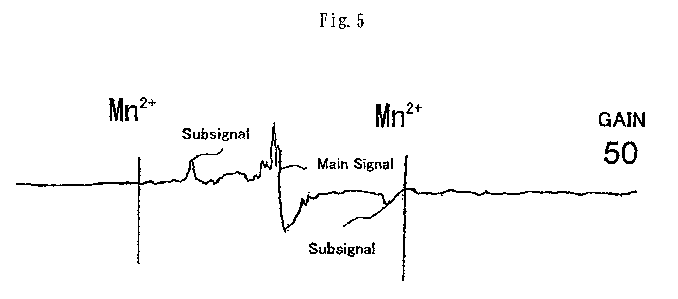

A 1.6 kg quantity of anatase titanium dioxide powder (C-02 manufactured by Ishihara Sangyo (K.K.)) was placed in a heated container having an internal capacity of 25 L and a baffle on an internal wall, and the container was loaded into an externally heated rotary kiln unit. The interior of the above-mentioned heated container was purged with nitrogen gas, after which 1.5 L/min of ammonium gas based on nitrogen gas was passed through. Simultaneously, the interior of the container was heated to 400°C with an external heater, and the container was heated for 90 min while being rotated. Following heating, the container was cooled to room temperature, yielding a yellow product. Fig. 5 shows the ESR spectrum (measurement temperature 77 K) for measurement with irradiation by light passing through a filter (L-42) cutting out light (obtained using a 500 W high-pressure mercury lamp) below 420 nm.

Reference Example 5

A 3 g quantity of the powder obtained in Reference Example 1 was suspended in 100 mL of pure water and stirred for 1 hr with a magnetic stirrer. The solution obtained was suction filtered. Sample remaining on the filter paper was again stirred in pure water and suction filtered. Filtration was repeated three times until the filtrate reached 6-7 on pH test paper.

The powder obtained was left standing for a day in a drier set to 110°C and dried, yielding the material exhibiting a main signal and two subsignals having the same g values as in the middle segment of Fig. 1.

Reference Example 6

A 23 kg quantity of titanium tetrachloride was gradually added to 207 kg of water having a temperature of 0°C held in a 300 L reaction vessel (permitting cooling and stirring). At that time, the temperature of the aqueous solution reached a maximum of
6°C. The titanium chloride was stirred for two days to prepare a transparent titanium tetrachloride aqueous solution. When 12.5 percent ammonia water was added dropwise while stirring the titanium tetrachloride aqueous solution that had been prepared, the solution gradually clouded over. The amount of ammonia water was adjusted so that the clouded solution reached pH 8.

The clouded solution was suction filtered. The white precipitate remaining on the filter paper weighed 131 kg. The white precipitate was dispersed in 200 kg of ammonia water (6 percent as $NH_3$), stirred for 24 hr, and suction filtered. The white precipitate following filtering weighed 108 kg. The white precipitate was placed in a forced ventilation shelf-type drier set to 50°C and dried for four days. Following drying, the sample weighed 17 kg.

A 1 kg quantity of the dried sample was placed in an alumina crucible ($20\times20\times5$ cm), the crucible was placed in a gas furnace, a thermocouple was placed on the surface of the sample, and the sample was sintered for 1 hr so that the sample temperature reached 400°C.

After cooling, the material exhibiting a main signal and two subsignals having the same g values as in the middle segment of Fig. 1 was obtained in thick, yellow form. This material was comminuted in a mortar and used in the evaluation described below.

Reference Example 7

A 3 g quantity of the powder prepared in Reference Example 6 was suspended in 100 mL of pure water and stirred for 1 hr with a magnetic stirrer. The solution obtained was suction filtered. The sample remaining on the filter paper was again stirred in pure water and suction filtered. Filtration was repeated three times until the filtrate reached 6-7 on pH test paper.

The powder obtained was left standing for a day in a drier set to 110°C and dried, yielding the material exhibiting a main signal and two subsignals having the same g values as in the middle segment of Fig. 1.

Reference Example 8

240 mL of pure water was charged to a one-liter beaker. To this, 60 g of titanyl sulfate from Kishida Chemicals (product code 020-78905) was added and the mixture was stirred and dissolved in a Labo Mixer. Next, 55 mL of ammonia water (high grade) from Kanto Chemicals was added to the aqueous solution to obtain a hydrolysis precipitate. The precipitate obtained was subjected to suction filtration and the white solid component (precipitation cake) was separated. This cake was rinsed three times with 1.0 liter of pure water (in a process where water was poured just before the cake split) with a total of 3.0 liters, filtered, and washed. The filtered cake was dried for 12 hr at 110°C until finally no filtrate came out, and then comminuted in a mortar. The white powder was sintered for 1 hr at 400°C in air, yielding a yellow material having a main signal and two subsignals having g values identical to those indicated in the middle section of the Figure 1.

Embodiment 1

The visible light responsive material obtained in Reference Example 7 was adequately mixed with a mixture of the composition indicated below in a paint shaker for 1 hr by shaking and then dispersed, yielding a paint composition.

| | |
|---|---|
| Visible light responsive material | 9.8 g |
| Vinyl acetate - acrylic copolymer | 0.7 g |
| (Boncoat 6290 made by Dainippon Ink and Chemicals Incorporated.) | |
| Water | 24.8 mL |

This paint composition of the above-mentioned composition was applied to a 20 cm$^2$ glass plate and dried for 10 min at 120°C, yielding a visible light responsive type coating film (Sample A). The content of visible light responsive material in Sample A was 90 percent based on volume of the total quantity of the visible light responsive material and binder.

Embodiment 2

The visible light responsive material obtained in Reference Example 7 was adequately mixed with a mixture of the composition indicated below in a paint shaker for 3 hr by shaking and then dispersed, yielding a paint composition. The Lumiflon LF200C referred to below is a fluoropolymer chiefly comprised of vinyl ether and fluoroolefin.

| | |
|---|---|
| Visible light responsive material | 9.80 g |
| Fluoropolymer | 0.80 g |
| (Lumiflon LF200C made by Asahi Glass Corp.) | |
| Isocyanate curing agent | 0.16 g |
| Titanium coupling agent | 1.00 g |
| (Plainact 338X made by Ajinomoto Corp.) | |
| Toluene | 23.60 mL |

This paint composition of the above-mentioned composition was applied to a 20 cm$^2$ glass plate and dried for 20 min at 120°C, yielding the visible light responsive type coating film of the present invention (Sample B). The content of visible light responsive type material in Sample B was 90 percent based on volume of the total quantity of the visible light responsive material and binder.

Embodiment 3

The visible light responsive material obtained in Reference Example 7 was adequately mixed with a mixture of the composition indicated below in a paint shaker for 3 hr by shaking and then dispersed, yielding a paint composition.

| | |
|---|---|
| Visible light responsive material | 7.64 g |
| Fluoropolymer | 2.36 g |
| (Lumiflon LF200C made by Asahi Glass Corp.) | |
| Isocyanate curing agent | 0.47 g |
| Titanium coupling agent | 0.76 g |
| (Plainact 338X made by Ajinomoto Corp.) | |
| Toluene | 22.50 mL |

This paint composition of the above-mentioned composition was applied to a 20 cm$^2$ glass plate and dried for 20 min at 120°C, yielding the visible light responsive type coating film of the present invention (Sample C). The content of visible light responsive material in Sample C was 70 percent based on volume of the total quantity of the visible light responsive material and binder.

Embodiment 4

The visible light responsive material obtained in Reference Example 7 was adequately mixed with a mixture of the composition indicated below in a paint shaker for 1 hr by shaking and then dispersed, yielding a paint composition.

| | |
|---|---|
| Visible light responsive material | 9.8 g |
| Polyorganosiloxane based inorganic binder | 2.7 g |
| (3:1 mixed product of T2202A and T2202B made by Japan Synthetic Rubber Corp.) | |
| Isopropyl alcohol | 21.5 mL |

This paint composition of the above-mentioned composition was applied to a 20 cm$^2$ glass plate and dried for 10 min at 180°C, yielding the visible light responsive type coating film of the present invention (Sample D). The content of visible light responsive material in Sample D was 90 percent based on volume of the total quantity of the visible light responsive material and binder.

Test Examples

NO Oxidation Activity (Elimination Rate)

Samples A-D prepared in Embodiments 1-4 were placed in Pyrex glass reaction vessels (inner diameter 160 mm, thickness 25 mm)). A 300 W xenon lamp was employed as light source. Light in the form of monochrome light with a half-width of 20 nm was irradiated by the irradiation device made by JASCO Corporation.

A 1.5 L/min flow of 0 percent RH simulated polluted air (NO: 1 ppm) was continuously fed into the reaction vessel and the change in concentration of NO was monitored at the reaction discharge outlet. The NO concentration was measured by the chemoluminescence method using ozone. The $NO_x$ elimination rate was obtained from the values accumulated over 1 hr.

Table 1 shows the NO elimination rate (%) in each sample at 470 nm.

Table 1

|  | NO Elimination Rate (%) at 470 nm | Binder |
|---|---|---|
| Embodiment 1 | 7.8 | Acrylic |
| Embodiment 2 | 1 | Fluorine-based |
| Embodiment 3 | 1.2 | Fluorine-based |
| Embodiment 4 | 5.1 | Silicate |

Embodiment 5

To test the antimicrobial property of the coating film comprising the visible light responsive material obtained in Reference Example 7, a dependency test was conducted with reference to the "Optical Film Adhesion Methods" of the Japan Food Center, a foundation.

An antimicrobial activity test was conducted with reference to the "Antimicrobial Activity Evaluation Test Method III for Antimicrobial Products" (1998 revised edition) of the Antimicrobial Product Technology Association for the test method.

The conditions were as follows:

Staphylococcus aureus: *Staphylococcus aureus* IFO 12732

Bacterial solution adjustment solution: 1/500 NB medium
(diluted with phosphate buffer solution)

Light irradiation conditions: 6,000 lx (white fluorescent lamp)

An alkoxysilane-based binder (made by Okitsumo Ltd.) were employed as a binder in the coating film sample. This binder was prepared by hydrolyzing a mixture consisting of 100 weight parts of methyltrimethoxysilane and 100 weight parts of colloidal silica aqueous dispersion (30 percent solid component). 100 g of this binder and 50 g of the sample obtained in Reference Example 7 were mixed and 50 g of isopropyl alcohol was added to the mixture obtained to prepare a paint. The paint thus prepared was applied by brush to a glass plate (5 x 5 cm), dried, and then baked for 2 hr at 180°C to prepare a coating film sample.

A bacterial solution adjustment solution comprising the above-mentioned staphylococcus aureus so as to yield about 3 x 10$^5$ bacteria alive was applied on the coating film sample obtained. The number of bacteria alive after irradiating the sample for 24 hr at 25°C with a white fluorescent lamp was counted by the usual method.

A glass plate without polyethylene film and coating film was employed as control sample. The results obtained are given in Table 2.

Table 2

| After irradiation with light for 24 h at 25°C | Sample | Test sample 1 | Test sample 2 | Average of two test samples |
|---|---|---|---|---|
| | Control | $1.8 \times 10^4$ | $7.4 \times 10^4$ | $4.6 \times 10^4$ |
| | Only glass | $1.1 \times 10^5$ | $1.6 \times 10^5$ | $1.35 \times 10^5$ |
| | Coating film sample | 10 or less | 10 or less | 10 or less |

Reference Example 9

6.00 g of the material obtained in Reference Example 8, 0.04 g of the condensed phosphate shown in Table 3, and prescribed amount of pure water were charged to a 100 mL polyethylene container, and using zirconia balls 5 mm in diameter, ball mill comminution was conducted for 1 hr. While stirring this dispersion solution with a magnetic stirrer, samples were collected with a dropper and applied to a slide glass. The application surface was then rendered uniform and dried to obtain a coating film.
Coating films were similarly prepared using a photocatalyst PC500 made by Millenium Corp. and a photocatalyst P-25 made by Nippon Aerogil in place of the material obtained in Reference Example 8.
The NO oxidation activity (elimination rate) of the coating films obtained was obtained by the same method as given for the above test example. The results are given in Table 3.

Table 3

| NO Oxidation Activity of Photocatalyst Dispersion | | | | | | |
|---|---|---|---|---|---|---|
| Photocatalyst | Quantity of pure water (solvent) g | Condensed phosphate (type) | Carrier quantity g | NO Elimination rate% | | |
| | | | | 360nm | 470nm | 570nm |
| Reference Example 8 | 18.96 | P | 0.053 | 20.3 | 2.7 | 0.3 |
| | | H | 0.008 | 16.5 | 1.8 | 0.4 |
| PC500 | 23.96 | P | 0.122 | 16.9 | 0 | 0 |
| | | H | 0.943 | 17.1 | 0.5 | 0.3 |
| P-25 | 28.96 | P | 0.057 | 19.2 | 1.3 | 0.2 |
| | | H | 0.056 | 9.2 | 0.6 | 0 |

P: Sodium pyrophosphate
H: Sodium hexamethaphosphate

Embodiment 6

To the dispersion prepared in Reference Example 9, a fluororesin dispersion, film-forming adjuvant, and antifoaming agent were mixed so as to yield the composition given below to prepare an aqueous paint.

| Paint composition | |
|---|---|
| Material of Reference Example 8 | 19.9 percent |
| Condensed phosphate | 1.0 percent |
| Fluororesin (solid component) | 9.1 percent |
| Film-forming adjuvant | 1.5 percent |
| Antifoaming agent | 0.05 percent |
| Water | Remainder |
| Total | 100 percent |

An aqueous sealer layer (30 μm) and acrylic silicon based paint layers (two 100 μm layers) were applied on a glass base material and one layer (30 μm: coating film 1) or two layers (coating film 2: 30 μm x 2) of the above-mentioned paint were applied thereover. The NO oxidation activity (elimination rate) of the coating films obtained was measured by the same method as employed in the above test example. The NO elimination rates (%) (coating film area 5 x 5 cm) are given in Table 4.

Table 4

|  | Coating film 1 | Coating film 2 |
|---|---|---|
| Fluorescent lamp irradiation | 13.8 | 13.4 |
| Blue LED irradiation | 1.2 | 2.6 |
| White LED irradiation | 1.9 | 2.0 |

A hydrophilic property test and weather resistance test were conducted on the coating films by the following methods. The hydrophilic property test was conducted on coating film 2 and the weather resistance test on coating film 1.

Evaluation of coating film surface hydrophilic property (measurement of contact angle)

Measurement method:

(1) The test paint was applied on a flat glass plate as a sample plate (coating film 2 was formed).

(2) Distilled water was dripped onto the sample plate and the contact angle of the sample plate was measured (initial contact angle).

(3) After 12 h of irradiation with a fluorescent lamp, the contact angle was measured (contact angle following irradiation with light).

The contact angle was measured in 10 spots and the average value was adopted as data. The results are given in Table 5. From the results in Table 5, it will be understood that the coating film of the present invention exhibits a hydrophilic property when irradiated with light.

Table 5

|  | Initial contact angle | After irradiation with fluorescent lamp |
|---|---|---|
| Coating film 2 | 43° | 5° |

Coating film weather resistance test (outdoor exposure test)

This test was conducted to evaluate the outdoor weather resistance of the coating film.
Under outdoor exposure conditions, an inspection was made for chalking, cracking, peeling, swelling, holes, and the like.

Test Method

The weather resistance test conditions were in conformity with JIS K-5400 9.4 (summarized below).

(1) Preparation of test strip: A flexible plate was prepared and paint was applied, after which it was thoroughly dried to obtain test strips (coating film 1).

(2) Exposure of test strips: The test strips were attached to a frame, tilted at an angle of 45°, and exposed outdoors.

(3) An inspection was made for chalking, cracking, peeling, swelling, holes, and the like.

As a result, peeling was observed in coating sample 1 after 11 days. By contrast, peeling was observed after 2 days in the coating film (single 30 μm layer of coating film 1) formed using the aqueous paint prepared by mixing the fluororesin dispersion, film-forming adjuvant, and antifoaming agent in the same compositional ratio as in Embodiment 6 into the dispersion prepared in Reference Example 9 using photocatalyst PC500 made by Millenium Corp. instead of the material obtained in Reference Example 8. That is, it is understood that the coating film of the present invention had good weather resistance.

Industrial Applicability

The present invention provides a paint and coating film comprising a new light responsive material responding even to visible radiation, and articles having this coating film. The visible light responsive type coating film and articles having this visible light responsive type coating film of the present invention are useful as photocatalysts, optical sensors, photocell materials, optical antistain materials, optical hydrophilic materials, and optical antimicrobial materials.

**Claims**

1. A visible light responsive type paint comprising a binder, a visible light responsive type material and a solvent, **characterized in that** said visible light responsive type material comprises at least anatase type titanium dioxide, as well as the main signal having a g value ranging from 2.004 to 2.007 and two subsignals having a g value ranging from 1.985 to 1.986 and a g value at 2.024 are observed in the ESR measured under the irradiation of light having a wavelength of 420 nm or more at 77 K in vacuum, and said three signals are observed in a little amount or substantially not observed in darkness at 77 K in vacuum.

2. The paint according to claim 1, wherein said three signals are also observed in the ESR measured in darkness and under the irradiation of light having a wavelength of 420 nm or more at an ordinary temperature in vacuum.

3. The paint according to claim 1 or 2, wherein said three signals appertain to radicals attributing to hole complement.

4. The paint according to claim 1, further comprising a subsignal having a g value ranging from 2.009 to 2.010 in the ESR measured under the irradiation of light having a wavelength of 420 nm or more at 77 K in vacuum.

5. The paint according to any of claims 1 to 4, wherein said visible light responsive type material is an oxygen defect type titanium oxide.

6. The paint according to any of claims 1 to 5, wherein the binder is an organic binder or an inorganic binder.

7. The paint according to any of claims 1 to 6, wherein the solvent is water or an organic solvent.

8. The paint according to claim 6 or 7, wherein the organic binder is at least one binder selected from the group consisting of fluorine polymer, silicon polymer, acryl resin, epoxy resin, polyester resin, melamine resin, urethane resin and alkyd resin.

9. The paint according to claim 6 or 7, wherein the inorganic binder is at least one binder selected from the group consisting of alkyl silicate, products obtained by hydrolyzing hydrolyte silicon compound such as halogenated silicon and its partially hydrolyzed substance, polycondensation products of organic polysiloxane compound, silicon compound such as silica, colloidal silica, water-glass and organopolysiloxane, phosphates such as zinc phosphate and aluminum phosphate, diphosphate, cement, calcium oxide, frit for enamel, glost for glass-lining and plaster.

10. The paint according to any of claims 1 to 9, further comprising a granulate substance, an adsorption agent, a carrier and/or polyphosphate.

11. The paint according to claim 10, wherein the granulate substance is an inorganic or organic particle having a mean particle diameter ranging from 1 nm to 100 μm, the adsorption agent and carrier are an activated carbon, zeolite or silica gel, and the polyphosphate is at least one selected from the group consisting of sodium hexamethaphosphate, sodium tetrapolyphosphate, sodium tripolyphosphate and sodium pyrophosphate.

12. A paint comprising a binder, polyphosphate, a visible light responsive type material and a solvent, **characterized in that** said visible light responsive type material comprises at least anatase type titanium dioxide, as well as the main signal having a g value ranging from 2.004 to 2.007 and two subsignals having a g value ranging from 1.985 to 1.986 and a g value at 2.024 are observed in the ESR measured under the irradiation of light having a wavelength of 420 nm or more at 77 K in vacuum, and said three signals are observed in a little amount or substantially not observed in darkness at 77 K in vacuum.

13. A visible light responsive type coating film comprising a binder and a visible light responsive type material, **characterized in that** said visible light responsive type material comprises at least anatase type titanium dioxide, as well as the main signal having a g value ranging from 2.004 to 2.007 and two subsignals having a g value ranging from 1.985 to 1.986 and a g value at 2.024 are observed in the ESR measured under the irradiation of light having a wavelength of 420 nm or more at 77 K in vacuum, and said three signals are observed in a little amount or substantially not observed in darkness at 77 K in vacuum.

14. The coating film according to claim 13, wherein the binder is an organic binder or an inorganic binder.

15. The coating film according to claim 14, wherein the organic binder is at least one binder selected from the group consisting of fluorine polymer, silicon polymer, acryl resin, epoxy resin, polyester resin, melamine resin, urethane resin and alkyd resin.

16. The coating film according to claim 14, wherein the inorganic binder is at least one binder selected from the group consisting of alkyl silicate, products obtained by hydrolyzing hydrolyte silicon compound such as halogenated silicon and the substance partially hydrolyzed, polycondensation products of organic polysiloxane compound, silicon compound such as silica, colloidal silica, water-glass and organopolysiloxane, phosphates such as zinc phosphate and aluminum phosphate, diphosphate, cement, calcium oxide, frit for enamel, glost for glass-lining and plaster.

17. The coating film according to any of claims 13 to 16, further comprising a granulate substance, an adsorption agent, a carrier and/or polyphosphate.

18. The coating film according to claim 17, wherein the granulate substance is an inorganic or organic particle having a mean particle diameter ranging from 1 nm to 100 $\mu$m, the adsorption agent and carrier are an activated carbon, zeolite or silica gel, and the polyphosphate is at least one selected from the group consisting of sodium hexamethaphosphate, sodium tetrapolyphosphate, sodium tripolyphosphate and sodium pyrophosphate.

19. A coating film exhibiting hydrophilic property under the irradiation of light and comprising a binder, polyphosphate and a visible light responsive type material, **characterized in that** said visible light responsive type material comprises at least anatase type titanium dioxide, as well as the main signal having a g value ranging from 2.004 to 2.007 and two subsignals having a g value ranging from 1.985 to 1.986 and a g value at 2.024 are observed in the ESR measured under the irradiation of light having a wavelength of 420 nm or more at 77 K in vacuum, and said three signals are observed in a little amount or substantially not observed in darkness at 77 K in vacuum.

20. An article provided with the coating film according to any of claims 13 to 19 on at least a part of surface.

21. The article according to claim 20, which is an inorganic article such as ceramics and glass, an organic article such as plastics, rubber, wood and paper, or a metal article such as a metal such as aluminum and an alloy such as steel.

Fig. 1

Fig. 2

Fig. 3

$2\theta$ /degree

Fig. 4

Fig. 5

# EP 1 285 953 A1

| INTERNATIONAL SEARCH REPORT | International application No. |
|---|---|
| | PCT/JP01/10037 |

**A. CLASSIFICATION OF SUBJECT MATTER**
Int.Cl⁷   C09D 201/00, 1/00, 5/16, 7/12 // B01J 21/06, 35/02

According to International Patent Classification (IPC) or to both national classification and IPC

**B. FIELDS SEARCHED**

Minimum documentation searched (classification system followed by classification symbols)
Int.Cl⁷   C09D 201/00-201/10, 1/00-1/12, 5/16, 7/12, B01J 21/06, 35/02

Documentation searched other than minimum documentation to the extent that such documents are included in the fields searched
Jitsuyo Shinan Koho          1922-1996     Toroku Jitsuyo Shinan Koho   1994-2002
Kokai Jitsuyo Shinan Koho   1971-2002     Jitsuyo Shinan Toroku Koho   1996-2001

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 00/10706 A1 (Kankyo Device Kenkyusho K.K.), 02 March, 2000 (02.03.2000), Claims; working examples 12 to 13 | 1-8,13-15, 20-21 |
| Y | & AU 9951980 A     & EP 1125636 A1 & JP 2001-212457 A | 9-12,16-19 |
| X | JP 11-92689 A (Tao K.K., et al.), 06 April, 1999 (06.04.1999), Claims; working examples (Family: none) | 1-7,9,13-14, 16,20-21 |
| Y | | 8,10-12, 15,17-19 |
| Y | EP 963789 A2 (Japan as Represented by Director General of Agency of Industrial Science and Technology, et al.), 15 December, 1999 (15.12.1999), Claims; Par. Nos. [0048] to [0059], [0062] to [0074], [0076] & US 5981425 A     & JP 2000-1631 A | 1-21 |

☒ Further documents are listed in the continuation of Box C.     ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07 February, 2002 (07.02.02) | 19 February, 2002 (19.02.02) |

| Name and mailing address of the ISA/ | Authorized officer |
|---|---|
| Japanese Patent Office | |
| Facsimile No. | Telephone No. |

Form PCT/ISA/210 (second sheet) (July 1992)

24

**INTERNATIONAL SEARCH REPORT**

International application No.

PCT/JP01/10037

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2000-303004 A (Nippon Bisoh K.K., et al.), 31 October, 2000 (31.10.2000), Claims (Family: none) | 1-21 |
| Y | JP 11-333304 A (Kankyo Device Kenkyusho K.K.), 07 December, 1999 (07.12.1999), Claims (Family: none) | 1-21 |
| P,X | JP 2001-96168 A (Kankyo Device Kenkyusho K.K.), 10 April, 2001 (10.04.2001), Claims (Family: none) | 1-8,13-15, 20-21 |
| P,Y | | 9-12,16-19 |
| P,X | JP 2001-98219 A (Agency of Industrial Science and Technology, et al.), 10 April, 2001 (10.04.2001), Claims (Family: none) | 1-8,13-15, 20-21 |
| P,Y | | 9-12,16-19 |
| P,X | JP 2001-98220 A (Kankyo Device Kenkyusho K.K.), 10 April, 2001 (10.04.2001), Claims (Family: none) | 1-8,13-15, 20-21 |
| P,Y | | 9-12,16-19 |
| E,X | JP 2001-322816 A (Sumitomo Chemical Company, Limited), 20 November, 2001 (20.11.2001), Claims; working examples 1 to 3 (Family: none) | 1-7,13-14, 20-21 |
| E,Y | | 8-12,15-19 |

Form PCT/ISA/210 (continuation of second sheet) (July 1992)